# EUROPÄISCHE PATENTANMELDUNG

(11) **EP 4 826 839 A1**
(43) Veröffentlichungstag der Anmeldung: **21.10.2026**
(21) Anmeldenummer: 26168761.0
(22) Anmeldetag: 27.03.2026
(51) Int. Cl.: H01M 10/61, H01M 10/613, H01M 10/625, H01M 10/6567

(54) **VORRICHTUNG UND VERFAHREN ZUM NACHFÜLLEN EINES DIELEKTRISCHEN KÜHLMEDIUMS IN EINEM KÜHLKREISLAUF UND BATTERIE MIT EINEM KÜHLKREISLAUF ZUR IMMERSIONSKÜHLUNG**

(30) Priorität: 17.04.2025 DE 102025001312
(71) Anmelder: Mercedes-Benz Group AG, 70372 Stuttgart (DE)
(72) Erfinder: GROSCHE, Lars, 70825 Korntal-Münchingen (DE)
(74) Vertreter: Mercedes-Benz IP

(57) **Zusammenfassung**

Die Erfindung betrifft eine Vorrichtung (1) zum Nachfüllen von dielektrischem Kühlmedium (17) in einen Kühlkreislauf (2) mit einer Kammer (4), in welche das Kühlmedium (17) durch eine Öffnung (11) mit verschließbarem Deckel (Wartungsklappe 12) einbringbar ist, und mit einem Leitungselement (5) zum Verbinden der Kammer (4) mit dem Kühlkreislauf (2). Die erfindungsgemäße Vorrichtung ist dadurch gekennzeichnet, dass die Kammer (4) im bestimmungsgemäßen Einsatz in Richtung der Schwerkraft (Erdbeschleunigung g) oberhalb des Kühlkreislaufs (2) angeordnet und über das Leitungselement (5) mit diesem direkt oder mittelbar verbunden ist, wobei in dem Leitungselement (5) eine schaltbare Ventileinrichtung (8) angeordnet ist, welche dazu eingerichtet ist, sich in Abhängigkeit eines über einen Leitfähigkeitssensor (10) in der Kammer (4) erfassten Leitwerts des nachgefüllten Kühlmediums (17) zu öffnen und zu schließen.

## Beschreibung

Die Erfindung betrifft eine Vorrichtung zum Nachfüllen eines dielektrischen Kühlmediums in einem Kühlkreislauf. Außerdem betrifft die Erfindung ein Verfahren zum Nachfüllen eines dielektrischen Kühlmediums in einem Kühlkreislauf mit einer derartigen Vorrichtung. Die Erfindung betrifft außerdem eine Batterie mit einem Kühlkreislauf zur Immersionskühlung und einer derartigen Vorrichtung.

Verschiedene Arten von Kühlkreisläufen für Batterien, insbesondere Traktionsbatterien in Form sogenannter Hochvoltbatterien gemäß der ECE100 R, sind prinzipiell aus dem Stand der Technik bekannt. Die DE 10 2019 216 052 A1 gibt hier in ihrer Beschreibungseinleitung einen sehr guten Überblick. Sie beschreibt außerdem eine sogenannte Immersionskühlung, bei welcher das Kühlmedium die Batterieeinzelzellen direkt umströmt und deshalb dielektrisch ausgebildet sein muss. Konkret geht es in der genannten Schrift um eine Zwei-Phasen-Immersionskühlung, prinzipiell kann die Immersionskühlung jedoch auch ohne einen Phasenwechsel des Kühlmediums realisiert werden.

Würde man bei einer solchen Immersionskühlung nun anstelle des dielektrischen Kühlmediums ein Kühlmedium mit einer elektrischen Leitfähigkeit einfüllen, so würde es innerhalb der Batterie zu Kurzschlüssen kommen, was in jedem Fall zu vermeiden ist.

In der Praxis ist es nun jedoch so, dass auch ein Kühlkreislauf zur Immersionskühlung beispielsweise im Bereich eines Entgasungsbehälters oder eines Ausgleichsbehälters für das Kühlmedium typischerweise eine Öffnung aufweist, um bei Bedarf Kühlmedium nachfüllen zu können. Häufig ist es nun so, dass dies nicht immer und ausschließlich in einer hierfür qualifizierten Fachwerkstatt erfolgt, sodass, beispielsweise bei einer Wartung durch den Nutzer bzw. Besitzer des Fahrzeugs oder eine fachfremde Werkstatt, durchaus die Gefahr besteht, dass dieser in Unkenntnis des Sachverhalts ein falsches Kühlmedium einfüllt, was dann zu einem Sicherheitsrisiko führen kann. Ein solches sicherheitskritisches Szenario gilt es nun zu verhindern.

Die Aufgabe der hier vorliegenden Erfindung ist es deshalb eine Vorrichtung und ein Verfahren zum Nachfüllen von dielektrischem Kühlmedium in einen Kühlkreislauf anzugeben, welche diese Gefahr eliminiert.

Erfindungsgemäß wird diese Aufgabe durch eine Vorrichtung mit den Merkmalen im Anspruch 1, und hier insbesondere im kennzeichnenden Teil des Anspruchs 1, gelöst. Auch ein Verfahren mit den Merkmalen im Anspruch 8 löst die Aufgabe. Sowohl bei der Vorrichtung als auch bei dem Verfahren ergeben sich vorteilhaften Ausgestaltungen und Weiterbildungen aus den hiervon jeweils abhängigen Unteransprüchen. Letztlich löst auch eine Batterie mit einem Kühlkreislauf zur Immersionskühlung und einer derartigen Vorrichtung die Aufgabe.

Die erfindungsgemäße Vorrichtung sieht eine Kammer, welche auch als Vorkammer bezeichnet werden könnte, vor, in welche das dielektrische Kühlmedium durch eine Öffnung mit verschließbarem Deckel einbringbar ist. Beim Einsatz der erfindungsgemäßen Vorrichtung kann das Kühlmedium also nicht unmittelbar in den Kühlkreislauf oder seinen Ausgleichsbehälter eingefüllt werden, sondern gelangt zuerst in die Kammer der erfindungsgemäßen Vorrichtung. Diese Kammer der erfindungsgemäßen Verfahren ist dabei im bestimmungsgemäßen Einsatz in Richtung der Schwerkraft oberhalb des Kühlkreislaufs angeordnet, beispielsweise oberhalb eines Ausgleichsbehälters des Kühlkreislaufs. Sie ist über ein Leitungselement mit dem Kühlkreislauf verbunden.

In der Kammer befindet sich ein Leitfähigkeitssensor, welcher im Falle eines eingefüllten Kühlmediums dessen Leitfähigkeit misst. In dem Leitungselement ist eine schaltbare Ventileinrichtung angeordnet, welche sich in Abhängigkeit des erfassten Leitwerts des Leitfähigkeitssensors öffnet oder schließt. Sie kann daher so eingerichtet werden, dass sie sich immer nur dann öffnet, wenn die Leitfähigkeit unterhalb eines vorgegebenen Grenzwerts liegt, also ausreichend klein ist, um eine Immersionskühlung gefahrlos durchführen zu können.

Eine besonders günstige Ausgestaltung der erfindungsgemäßen Vorrichtung kann es ferner vorsehen, dass in der Kammer ein Drucksensor angeordnet ist, welcher dazu eingerichtet ist, eine Befüllung der Kammer mit Kühlmedium zu erfassen. Durch einen einfachen Drucksensor kann so abgesichert werden, dass ein Kühlmedium in der Kammer ist, bevor die Leitfähigkeit erfasst wird.

In dem Leitungselement kann ferner ein Filterelement angeordnet sein. Ein solches Filterelement, welches vorzugsweise als Feinfilter ausgebildet ist, ist dann in der Lage, eventuelle Verunreinigungen innerhalb des Kühlmediums zurückzuhalten, bevor dieses über das Leitungselement in den eigentlichen Kühlkreislauf gelangt. Hierdurch ist es beispielsweise möglich elektrisch leitende Partikel oder Späne zuverlässig aus dem Medium auszufiltern, da auch solche sich, insbesondere wenn sie sich innerhalb des Kühlkreislaufs in bestimmten Bereichen anreichern, zu elektrischen Problemen führen könnten.

Eine weitere sehr vorteilhafte Ausgestaltung der erfindungsgemäßen Vorrichtung sieht es außerdem vor, dass ein Sensor an der Öffnung angeordnet ist, welcher dazu eingerichtet ist zu erkennen, ob die Öffnung offen oder geschlossen ist. Über einen solchen Sensor, welcher prinzipiell aus dem Stand der Technik bekannt ist, beispielsweise bei Tankklappen von Fahrzeugen, kann also erfasst werden, ob die Öffnung zum Einfüllen des Kühlmediums in die Kammer offen oder geschlossen ist.

Die schaltbare Ventileinrichtung selbst kann dabei vorzugsweise als Klappe ausgebildet sein, welche entsprechend einfach und kostengünstig in der Umsetzung ist.

Eine weitere sehr günstige Ausgestaltung der erfindungsgemäßen Vorrichtung kann es außerdem vorsehen, dass das Leitungselement an seinem der Kammer abgewandten Ende ein Kupplungselement aufweist. Ein solches Kupplungselement, beispielsweise in der Form eines VDA-Konnektors, erlaubt einen einfachen Aufbau und erforderlichenfalls auch einen einfachen Austausch der erfindungsgemäßen Vorrichtung. Dies kann insbesondere dann notwendig sein, wenn diese versehentlich mit einem nichtdielektrischen Kühlmedium befüllt worden ist. Sie muss dann geleert und gereinigt werden, was im Falle eines Kupplungselements zwischen der Vorrichtung und dem eigentlichen Kühlkreislauf vergleichsweise einfach möglich ist.

Bei dem erfindungsgemäßen Verfahren ist es nun so, dass über einen Sensor das Öffnen der Öffnung der Kammer erkannt und an ein Steuergerät weitergemeldet wird. Im Anschluss wird eine Füllstandssensorik aktiviert, wonach bei einer darüber erkannten Änderung des Füllstands in der Kammer der Leitfähigkeitssensor aktiviert wird. Dieser wird also erst dann aktiviert, wenn ein Medium in die Kammer eingefüllt worden ist. Bei einem Leitwert des in die Kammer eingefüllten Kühlmediums oberhalb eines vorgegebenen Grenzwerts bleibt die schaltbare Ventileinrichtung geschlossen und es wird eine Warnmeldung ausgegeben. Eine solche Warnmeldung kann beispielsweise auf das nicht geeignete/sicherheitskritische Kühlmedium hinweisen und den Nutzer zu einen Werkstattbesuch auffordern bzw. zur Entleerung und Reinigung der Kammer der Vorrichtung. Wird dahingegen ein Leitwert unterhalb des vorgegebenen Grenzwerts gemessen dann wird die schaltbare Ventileinrichtung geöffnet, um das Kühlmedium aus der Kammer in den Kühlkreislauf fließen zu lassen. Auch hier kann wieder das oben bereits angesprochene Filterelement passiert werden, um eventuelle Partikel zuverlässig aus dem dielektrischen Kühlmedium auszufiltern.

Gemäß einer Weiterbildung kann es prinzipiell auch vorgesehen sein, dass ergänzend zum gemessenen Leitwert unterhalb des vorgegebenen Grenzwerts der Sensor an der Öffnung signalisieren muss, dass diese wieder geschlossen worden ist, bevor die schaltbare Ventileinrichtung geöffnet wird. Hierdurch lässt sich ausschließen, dass bei einer gewissen Menge an eingefülltem dielektrischem Medium ein weiteres ungeeignetes Medium in die Kammer nachgefüllt wird, während die Ventileinrichtung bereits geöffnet ist. So könnte beispielsweise verhindert werden, dass jemand auf die Idee kommt, das dielektrische Kühlmedium mit Wasser zu verdünnen, nachdem er gemerkt hat, dass die in die Kammer eingefüllte Menge eventuell nicht ausreicht.

Gemäß einer günstigen Weiterbildung des erfindungsgemäßen Verfahrens kann es dabei vorgesehen sein, dass als Füllstandssensorik ein Drucksensor in der Kammer genutzt wird, dessen Initialwert nach dem Öffnen der Öffnung auf Null gesetzt wird. Hierdurch kann über den Drucksensor eine sehr einfache und dennoch sehr effiziente Messung, ob ein Kühlmedium in der Kammer vorhanden ist oder nicht, initiiert werden. Anders als bei einer klassischen Füllstandssensorik, beispielsweise einem Sensor über einen Schwimmer oder dergleichen, ist dieser Aufbau sehr einfach, kostengünstig und arbeitet robust, ohne eine Wartung zu benötigen.

Wie bereits erwähnt kann die Vorrichtung insbesondere mit einem Entlüftungs- oder Ausgleichsbehälter des Kühlkreislaufs verbunden sein. Dieser kann gemäß einer sehr vorteilhaften Weiterbildung einen Füllstandsensor, insbesondere in Form einer Pegelsonde, aufweisen, mittels welchem der Füllstand des Kühlmediums in dem Kühlkreislauf erfasst wird.

Eine bevorzugte Ausgestaltung des erfindungsgemäßen Verfahrens kann es nun vorsehen, dass die schaltbare Ventileinrichtung immer dann geschlossen wird, wenn entweder die Füllstandssensorik der Kammer ein "Leer"-Signal oder der Füllstandsensor des Kühlkreislaufs ein "Voll"-Signal erzeugt. Hierdurch lässt sich also das gesamte in der Kammer befindliche Kühlmedium, für den Fall, dass sein elektrischer Leitwert unterhalb des Grenzwerts liegt, in den Kühlkreislauf übertragen oder eine entsprechende Teilmenge dieses dielektrischen Kühlmediums, bis der Füllstandsensor des Kühlkreislaufs signalisiert, dass dieser "Voll" ist.

Für den Fall, dass die schaltbare Ventileinrichtung aufgrund des "Leer"-Signals der Füllstandssensorik der Kammer erfolgt ist, kann nach dem Schließen der Öffnung, falls dies nicht bereits geschehen ist, die Sensorik noch kurzzeitig weiterbetrieben werden. Dadurch wird es möglich die schaltbare Ventileinrichtung nach dem Schließen der Öffnung nochmals kurz zu öffnen, um die Kammer vollständig zu entleeren, da das "Leer"-Signal, insbesondere beim Einsatz eines Drucksensors, immer mit einem gewissen Toleranzwert behaftet ist.

Eine erfindungsgemäße Batterie umfasst nun einen Kühlkreislauf zur Immersionskühlung der Batterie sowie eine derartige Vorrichtung zum Nachfüllen eines dielektrischen Kühlmediums, welche in der erfindungsgemäßen Art und gegebenenfalls über das erfindungsgemäße Verfahren so betreibbar ist bzw. betrieben wird, dass kein elektrisch leitendes Kühlmedium mit einem elektrischen Leitwert oberhalb eines vorgegebenen Grenzwerts in den Kühlkreislauf der Batterie gelangen kann.

Weitere vorteilhafte Ausgestaltungen der erfindungsgemäßen Vorrichtung sowie des Verfahrens ergeben sich auch anhand des Ausführungsbeispiels, welches nachfolgend unter Bezugnahme auf die Figuren näher beschrieben ist.

Dabei zeigen:
- Fig. 1: eine schematische Darstellung einer möglichen Ausführungsform der erfindungsgemäßen Vorrichtung und eines Kühlkreislaufs; und
- Fig. 2: eine schematische Darstellung eines möglichen Verfahrensablaufs beim Nachfüllen von dielektrischem Kühlmedium.

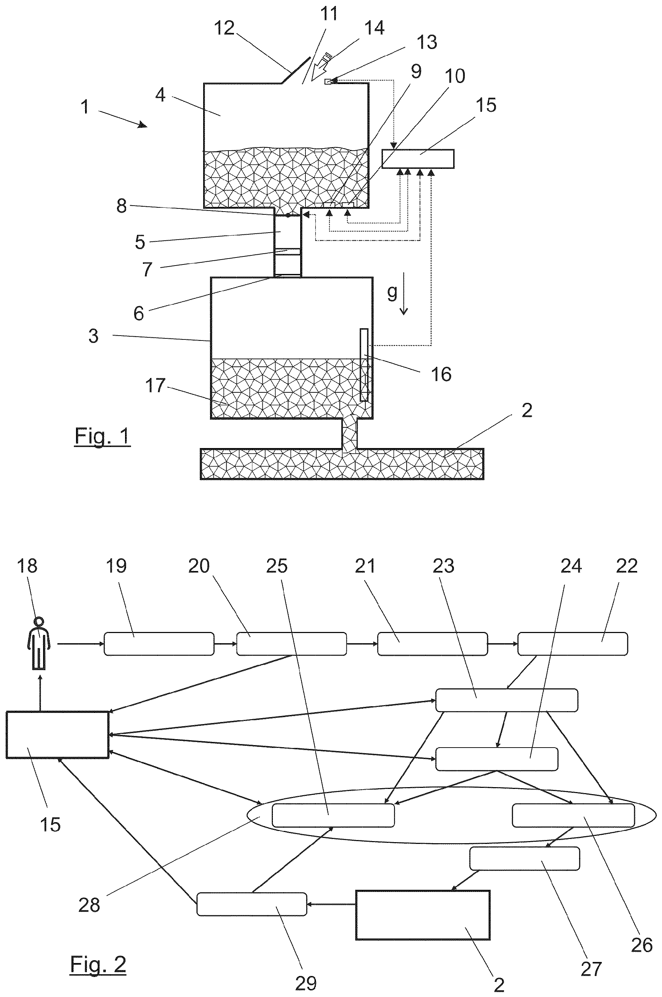

In der Darstellung der Figur 1 ist eine mit 1 bezeichnete Vorrichtung zum Nachfüllen eines dielektrischen Kühlmediums in einen angedeuteten Kühlkreislauf 2 zu erkennen. Dieser Kühlkreislauf 2 dient zur Immersionskühlung einer hier nicht dargestellten Hochvoltbatterie, welche insbesondere als Traktionsbatterie in einem zumindest teilweise elektrisch angetriebenen Fahrzeug, welches hier ebenfalls nicht dargestellt ist, zum Einsatz kommen soll.

Die Vorrichtung 1 ist dabei in Richtung der Schwerkraft, welche hier durch die Erdbeschleunigung g angedeutet ist, oberhalb des Kühlkreislaufs 2 und insbesondere oberhalb eines mit 3 bezeichneten Ausgleichsbehälters dieses Kühlkreislaufs 2 angeordnet. Die Vorrichtung 1 selbst umfasst eine Kammer 4 sowie ein Leitungselement 5, welches diese Kammer 4 mit dem Ausgleichsbehälter 3 verbindet. In demjenigen Bereich, in dem das Leitungselement 5 mit dem Ausgleichsbehälter 3 verbunden ist, kann beispielsweise ein mit 6 bezeichnetes Kupplungssystem, beispielsweise ein VDA-Konnektor, zum Einsatz kommen. Innerhalb des Leitungselements 5 ist außerdem ein Filterelement 7 angeordnet, welches vorzugsweise als Feinfilter zum Ausfiltern eventueller Schmutzpartikel eines von der Kammer 4 in den Ausgleichsbehälter 3 strömenden mit 17 bezeichneten Kühlmediums dient. In dem Leitungselement 5 bzw. am Übergang des Leitungselements 5 in die Kammer 4 ist außerdem eine schaltbare Ventileinrichtung 8 angeordnet, welche vorzugsweise als schaltbare Klappe ausgebildet sein kann. In der Kammer 4, und hier in einer Position in Richtung der Schwerkraft (g) unten ist einerseits ein Drucksensor 9 und andererseits ein, vorzugsweise kapazitiver, Leitfähigkeitssensor 10 angeordnet.

Die Kammer 4 weist außerdem eine Öffnung 11 auf, welche im Normalfall verschlossen ist, beispielsweise, wie hier angedeutet, über eine Wartungsklappe 12. An die Stelle dieser Wartungsklappe 12 könnte auch ein Drehverschluss oder dergleichen treten. Ein Sensor 13 erfasst den Zustand dieser Wartungsklappe 12, kann also erkennen, ob die Öffnung 11 geöffnet oder geschlossen ist. Dieser Sensor 13 ist ebenso wie der Drucksensor 9 und der Leitfähigkeitssensor 10 mit einem Steuergerät 15, beispielsweise einem Fahrzeugsteuergerät oder einer mit dieser in Kommunikationsverbindung bestehenden eigenständigen Steuerung, verbunden. Über dieses Steuergerät 15 kann auch die schaltbare Ventileinrichtung 8 betätigt werden, wie es durch die strichpunktierte Wirkungslinie angedeutet ist. Das Steuergerät 15 steht außerdem in Kommunikationsverbindung mit einem Füllstandssensor, beispielsweise einer Pegelsonde 16 innerhalb des Ausgleichsbehälters 3, über welche der Füllstand des Kühlkreislaufs mit dem Kühlmedium 17 erfasst wird.

Das Steuergerät 15 ist nun, wie es in der Darstellung der Figur 2 angedeutet ist, in der Lage, mit einer das Fahrzeug nutzenden Person 18 zu kommunizieren, z.B. über ein Zentraldisplay in dem Fahrzeug. Für den Fall, dass über die Pegelsonde 16 ein zu geringer Füllstand des Kühlmediums 17 in dem Kühlkreislauf 2 erkannt worden ist, kann eine entsprechende Meldung durch das Fahrzeugsteuergerät 15 generiert und wie es durch den Pfeil zwischen dem Steuergerät 15 und der Person 18 angedeutet ist an diese ausgegeben werden. Dies kann beispielsweise über ein fahrzeugintegriertes Anzeigedisplay oder auch fahrzeugexternes mit dem Fahrzeug zusammenwirkendes Anzeigedisplay, beispielsweise über eine App auf einem mobilen Endgerät, visualisiert werden. Die Visualisierung kann dabei grundsätzlich optisch, akustisch oder auch haptisch erfolgen, wie es auch für die nachfolgend noch angesprochenen Visualisierungen gilt.

Die Person 18 wird nun eine Werkstatt aufsuchen oder ggf. auch selbst ein Kühlmedium nachfüllen, wie es in Figur 1 durch den Pfeil 14 angedeutet ist. Dabei öffnet sie selbst oder eine Person in der Werkstatt in dem mit 19 in der Darstellung der Figur 2 dargestellten Schritt die Wartungsklappe 12. Der Sensor 13 detektiert dies im Verfahrensschritt 20. Im Anschluss aktiviert das Fahrzeugsteuergerät 15 in dem mit 21 bezeichneten Schritt den Drucksensor 9 und kalibriert diesen, indem er seinen Messwert auf Null setzt. Im anschließenden Schritt 22 wird die Person 18 nun das aus ihrer Sicht geeignete Kühlmedium 17 in die Kammer einfüllen.

Im Schritt 23 befindet sich also Kühlmedium in der Kammer 4, was über den Drucksensor 9 erkannt wird, sodass dieser die Anwesenheit des Kühlmediums 17 in der Kammer 4 an das Fahrzeugsteuergerät 15 zurückmelden kann. Das Fahrzeugsteuergerät 15 aktiviert daraufhin den Leitfähigkeitssensor 10, um den Leitwert des in die Kammer 4 eingefüllten Kühlmediums 17 im Schritt 24 zu prüfen. Ist die Leitfähigkeit des Kühlmediums zu hoch, dann wird die Ventileinrichtung 8 geschlossen bzw. bleibt gemäß des mit 25 bezeichneten Schritts geschlossen. Ist der Leitwert unterhalb eines vorgegebenen Grenzwerts, dann wird dahingegen im Schritt 26 die Ventileinrichtung 8 geöffnet, sodass das Kühlmedium 17 nach der im Schritt 27 angedeuteten Filtrierung über das Filterelement 7 in den Kühlkreislauf 2 bzw. seinen Ausgleichsbehälter 3 strömen kann. Das Öffnen und Schließen der Klappe in den Schritten 25, 26 bzw. das Geschlossen halten der Ventileinrichtung 8 im Schritt 25 wird, wie es durch den Doppelpfeil angedeutet ist, dabei auch wieder von dem Steuergerät 15 initiiert und überwacht. Das Öffnen bzw. Schließen der Ventileinrichtung 8 in den Schritten 25 bzw. 26, welches hier durch das mit 28 bezeichnete Oval eingekreist ist, unterliegt dabei immer einer Zweifaktor-Authentifizierung, da einerseits über den Drucksensor 9 festgestellt werden muss, dass ein Kühlmedium in der Kammer 4 ist und gleichzeitig dieses die entsprechenden Anforderungen an die Leitfähigkeit erfüllen muss, um beispielsweise im Schritt 26 die Ventileinrichtung 8 zu öffnen.

Nimmt nun der Füllstand des Kühlmediums 17 innerhalb der Kammer 4 so weit ab, dass die Kammer 4 leer oder fast leer ist, wird dies wiederum im Schritt 23 durch den Drucksensor 9 detektiert. Er gibt dann zusammen bzw. alternativ zur Sperrung über einen zu hohen Leitwert des Kühlmediums 17 ein Signal an den Verfahrensschritt 25, die Ventileinrichtung 8 zu schließen. Ein alternatives Schließsignal kann auch über den Schritt 29 ausgelöst werden, welcher die Füllstandsmessung über die Pegelsonde 16 beinhaltet. Die Ventileinrichtung 8 kann also entweder geschlossen werden, wenn kein Kühlmedium 17 mehr in der Kammer 4 vorhanden ist (Schritt 23), oder wenn ausreichend Kühlmedium 17 in dem Kühlkreislauf 2 vorhanden ist (Schritt 28). Gleichzeitig bleibt die Ventileinrichtung 8 immer dann geschlossen, wenn der Leitwert des Fluids gemäß der Prüfung im Schritt 24 oberhalb des vorgegebenen Grenzwerts liegt.

## Patentansprüche

1. Vorrichtung (1) zum Nachfüllen von dielektrischem Kühlmedium (17) in einen Kühlkreislauf (2) mit einer Kammer (4), in welche das Kühlmedium (17) durch eine Öffnung (11) mit verschließbarem Deckel (Wartungsklappe 12) einbringbar ist, und mit einem Leitungselement (5) zum Verbinden der Kammer (4) mit dem Kühlkreislauf (2),
**dadurch gekennzeichnet, dass**
die Kammer (4) im bestimmungsgemäßen Einsatz in Richtung der Schwerkraft (Erdbeschleunigung g) oberhalb des Kühlkreislaufs (2) angeordnet und über das Leitungselement (5) mit diesem direkt oder mittelbar verbunden ist, wobei in dem Leitungselement (5) eine schaltbare Ventileinrichtung (8) angeordnet ist, welche dazu eingerichtet ist, sich in Abhängigkeit eines über einen Leitfähigkeitssensor (10) in der Kammer (4) erfassten Leitwerts des nachgefüllten Kühlmediums (17) zu öffnen und zu schließen.

2. Vorrichtung (1) nach Anspruch 1,
**dadurch gekennzeichnet, dass**
in der Kammer (4) ein Drucksensor (9) angeordnet ist, welcher dazu eingerichtet ist, eine Befüllung der Kammer (4) mit einem Kühlmedium (17) zu erkennen.

3. Vorrichtung (1) nach Anspruch 1 oder 2,
**dadurch gekennzeichnet, dass**
in dem Leitungselement (5) ein Filterelement (7) angeordnet ist.

4. Vorrichtung (1) nach einem der Ansprüche 1 bis 3,
**dadurch gekennzeichnet, dass**
der Leitfähigkeitssensor (10) als kapazitiver Sensor ausgebildet ist.

5. Vorrichtung (1) nach einem der Ansprüche 1 bis 4,
**dadurch gekennzeichnet, dass**
im Bereich der Öffnung (11) ein Sensor (13) angeordnet ist, welcher dazu eingerichtet ist zu erkennen, ob die Öffnung (11) offen oder geschlossen ist.

6. Vorrichtung (1) nach einem der Ansprüche 1 bis 5,
**dadurch gekennzeichnet, dass**
die schaltbare Ventileinrichtung (8) als Klappe ausgebildet ist.

7. Vorrichtung (1) nach einem der Ansprüche 1 bis 6,
**dadurch gekennzeichnet, dass**
das Leitungselement (5) an seinem der Kammer (4) abgewandten Ende ein Kupplungselement (6) aufweist.

8. Verfahren zum Nachfüllen eines dielektrischen Kühlmediums in einem Kühlkreislauf (2) mit einer Vorrichtung (1) nach einem der Ansprüche 1 bis 7,
**dadurch gekennzeichnet, dass**
über einen Sensor (13) das Öffnen einer Öffnung (11) der Kammer (4) erkannt und an ein Steuergerät (15) gemeldet wird, wonach eine Füllstandssensorik (9) in der Kammer (4) aktiviert wird, wonach bei einer darüber erkannten Änderung des Füllstands in der Kammer (4) der Leitfähigkeitssensor (10) aktiviert wird, wobei bei einem Leitwert des in die Kammer eingefüllten Kühlmediums oberhalb eines vorgegebenen Grenzwerts die schaltbare Ventileinrichtung (8) geschlossen bleibt und eine Warnmeldung generiert und ausgegeben wird, und wobei bei einem Leitwert des in die Kammer (4) eingefüllten Kühlmediums (17) unterhalb des vorgegebenen Grenzwerts die schaltbare Ventileinrichtung (8) geöffnet wird, um das Kühlmedium (17) aus der Kammer (4) in den Kühlkreislauf (2) fließen zu lassen.

9. Verfahren nach Anspruch 8,
**dadurch gekennzeichnet, dass**
bei einem Leitfähigkeitswert des eingefüllten Kühlmediums unterhalb des Grenzwerts die schaltbare Ventileinrichtung (8) erst dann geöffnet wird, wenn die Öffnung (11) wieder geschlossen wurde.

10. Verfahren nach Anspruch 8 oder 9,
**dadurch gekennzeichnet, dass**
als Füllstandssensorik der Drucksensor (9) in der Kammer (4) genutzt wird, wozu dessen Initialwert nach dem Öffnen der Öffnung (11) auf Null gesetzt wird.

11. Verfahren nach einem der Ansprüche 8 bis 10,
**dadurch gekennzeichnet, dass**
die Vorrichtung (1) mit einem Entlüftungs- oder Ausgleichsbehälter (3) des Kühlkreislaufs (2) verbunden ist, in welchem ein Füllstandssensor (Pegelsonde 16) angeordnet ist, mittels welchem der Füllstand des Kühlmediums (17) im Kühlkreislauf (2) erfasst wird.

12. Verfahren nach Anspruch 11,
**dadurch gekennzeichnet, dass**
die schaltbare Ventileinrichtung (8) geschlossen wird, wenn entweder die Füllstandssensorik (Drucksensor 9) der Kammer (4) ein "Leer"-Signal oder der Füllstandssensor (Pegelsonde 16) des Kühlkreislaufs (2) ein "Voll"-Signal erzeugt.

13. Batterie mit einem Kühlkreislauf (2) zur Immersionskühlung und einer Vorrichtung (1) nach einem der Ansprüche 1 bis 7.
